# EUROPEAN PATENT APPLICATION

(11) **EP 4 851 578 A1**
(43) Date of publication of application: **09.12.2026**
(21) Application number: 26180507.1
(22) Date of filing: 22.05.2026
(51) Int. Cl.: G01C 15/06, G01D 11/30

(54) **COMPLIANT FIXTURE FOR MOUNTING MEASUREMENT DEVICES TO A PLANAR MEMBER**

(30) Priority: 05.06.2025 US 202519229869
(71) Applicant: Trimble Inc, Westminster CO 80021 (US)
(72) Inventor: KAUK, Cole, WESTMINSTER, 80021 (US)
(74) Representative: AWA Sweden AB

(57) **Abstract**

A compliant fixture for mounting devices to a planar member includes a rigid element, spring-like elements, and input elements. The rigid element has a top side and a bottom side, where the bottom side includes two side portions separated by a slot that forms a gap between the side portions. The spring-like elements each have a portion with an oval shape and a portion with connectors, where each of the spring-like elements is positioned adjacent to and coupled to one of the side portions by a first portion of the connectors. The input elements are each positioned adjacent to one of the side portions, where each of the input elements is coupled to the spring-like elements that are coupled to the adjacent side portion. Each input element is coupled to the spring-like elements by a second portion of the connectors.

## Description

### BACKGROUND

Measuring a position along an edge of a structural steel member using a Global Navigation Satellite System (GNSS) device, a universal total station (UTS), a survey target, or a similar measurement device or technique can be difficult. This can be especially true when trying to center a GNSS receiver or other device on an end of a structural member that has planar portions such as a pile. A "pile" in this case refers to an object such as an I beam that may be embedded in the ground using a piling machine or other driving device.

There are not any consistent methods for in-field positioning measurements of edges of piles or other structural members having planar portions. One of the difficulties in developing a fixture for these structures is that piles are not always of uniform shape and/or thickness, and the shape may be warped through the process of driving them into the ground. This means a "cap" style fixture, even if used on standard pile sizes, may not be ideal after a pile has been embedded in the ground because to guarantee broader compatibility may require that the fixture fit loosely or require some form of clamp to hold it in place.

### SUMMARY

To solve the above issues, some of the embodiments described herein facilitate rapid and accurate position measurements along edges of piles, structural members having planar portions, and other vertical planes or walls. A compliant fixture is described that can be attached to a measurement device such as a GNSS device, a UTS, a survey target, or other position measurement device. In some embodiments, its compliant nature allows it to both self-center and grip a surface of a measured edge even if the surface is warped.

Some embodiments include a compliant fixture consisting of spring-like elements that are each connected to a single input element, and where manipulation of the input element causes the spring-like elements to either grip or loosen the compliant fixture from the object being measured. One benefit of some embodiments is that the compliant fixture simultaneously pulls away from multiple planes of varying angles and/or thicknesses. Some embodiments have a variable fit tolerance to provide a quick release device that is flexible enough to function over damaged or otherwise imperfect surfaces.

Some embodiments of the compliant fixture include a rigid center connected to four spring-like elements that press against all inside surfaces of a pile. There are additionally two finger holds or input elements that are each connected to two of the spring-like elements, so that when the finger holds are pulled away from the rigid center, the spring-like elements contract and simultaneously reduce the force applied to all contacting surfaces of the pile. This allows a user to pull one finger hold to release the corresponding two spring-like elements. When both finger holds are pulled, the spring-like elements are released and the compliant fixture can be easily removed from the pile. The same action can be used to open the spring-like elements so that it can be placed back on the pile.

In accordance with a particular embodiment, a compliant fixture for mounting devices to a planar member includes a rigid element having a top side and a bottom side with a hole passing therethrough, the hole sized to enable a GNSS device or a survey target to be coupled to the top side of the rigid element, wherein the bottom side includes two side portions separated by a slot, the slot forming a gap between the side portions, the slot sized to allow the planar member to fit into the gap so that the side portions are separated from each other by the planar member, each of the side portions including a backside facing the slot and a front side facing outward away from the slot, the front side and the backside connected by end surfaces; four spring-like elements each having a portion with an oval shape and a portion with connectors, the connectors including a first portion of connectors and a second portion of connectors, wherein each of the spring-like elements is positioned adjacent to and coupled to a different one of the end surfaces of the side portions by the first portion of connectors, so that each side portion has one of the spring-like elements coupled to each end surface thereof, and wherein each of the spring-like elements coupled to an end surface of one side potion is adjacent to another one of the spring-like elements that is coupled to an end surface of the other side portion, so that a plane aligned with the slot separates one of the side portions with spring-like elements coupled to each end surface thereof from the other side portion with spring-like elements coupled to each end surface thereof; and two input elements each positioned adjacent to one of the side portions, wherein each of the input elements is coupled to two of the spring-like elements that are coupled to the adjacent side portion, and each input element is coupled to the two spring-like elements by the second portion of connectors.

In an embodiment, for each of the spring-like elements, the first portion of the connectors cross the second portion of the connectors in a cris-cross manner without being coupled to each other.

In another embodiment, the spring-like elements each have one end coupled to the end surface of the side portion by the first portion of connectors and the other end coupled to the adjacent input element by the second portion of connectors, so that when the input element is pulled laterally away from the slot, the spring-like elements coupled to the input element are pulled inward in a direction parallel to the slot and outward in a direction away from the slot.

In another embodiment, each of the spring-like elements include three of the first portion of connectors and two of the second portion of connectors.

In another embodiment, each of the input elements has a partial cylindrical shape.

In another embodiment, each of the side portions and the two spring-like elements coupled thereto and the input element coupled to the two spring-like elements consist essentially of the same material with the side portions being thicker and more rigid than the spring-like elements and the input element.

In another embodiment, the rigid element includes tabs on opposite sides overlying the slot, the tabs configured to contact an end of the planar member.

In yet another embodiment, the planar member is part of a pile, and the spring-like elements are sized so that when the compliant fixture is attached to the pile, each spring-like element contacts two perpendicular surfaces of the pile.

In accordance with another embodiment, a compliant fixture for mounting devices to a planar member includes a rigid element having a top side and a bottom side, wherein the bottom side includes two side portions separated by a slot that forms a gap between the side portions, each of the side portions including a backside facing the slot and a front side facing outward away from the slot, the front side and the backside connected by end surfaces; spring-like elements each having a portion with an oval shape and a portion with connectors, the connectors including a first portion of connectors and a second portion of connectors, wherein each of the spring-like elements is positioned adjacent to and coupled to a different one of the end surfaces of the side portions by the first portion of connectors, so that each side portion has one of the spring-like elements coupled to each end surface thereof, and wherein each of the spring-like elements coupled to an end surface of one side potion is adjacent to another one of the spring-like elements that is coupled to an end surface of the other side portion, so that a plane aligned with the slot separates one of the side portions with spring-like elements coupled to each end surface thereof from the other side portion with spring-like elements coupled to each end surface thereof; and input elements each positioned adjacent to one of the side portions, wherein each of the input elements is coupled to the spring-like elements that are coupled to the adjacent side portion, and each input element is coupled to the spring-like elements by the second portion of connectors.

In an embodiment, the rigid element, the spring-like elements, and the input elements consist essentially of the same material with the rigid element being thicker and more rigid than the spring-like elements and the input elements.

In another embodiment, the planar member is part of a pile, and the slot is sized to allow the planar member of the pile to fit into the gap so that the side portions are separated from each other by the planar member of the pile.

In another embodiment, the spring-like elements consist of four spring-like elements.

In another embodiment, the input elements consist of two input elements.

In yet another embodiment, the planar member is part of a pile, and the spring-like elements are configured to self-center the compliant fixture on the pile.

In accordance with yet another embodiment, a compliant fixture for mounting devices to a planar member includes a rigid element having a top side and a bottom side, wherein the bottom side includes two side portions separated by a slot that forms a gap between the side portions; spring-like elements each having a portion with an oval shape and a portion with connectors, the connectors including a first portion of connectors and a second portion of connectors, wherein each of the spring-like elements is positioned adjacent to and coupled to one of the side portions by the first portion of connectors; and input elements each positioned adjacent to one of the side portions, wherein each of the input elements is coupled to the spring-like elements that are coupled to the adjacent side portion, and each input element is coupled to the spring-like elements by the second portion of connectors.

In an embodiment, the rigid element, the spring-like elements, and the input elements consist essentially of the same material with the rigid element being thicker and more rigid than the spring-like elements and the input elements.

In another embodiment, the planar member is part of a pile, and the spring-like elements are configured to self-center the compliant fixture on the pile.

In another embodiment, the compliant fixture also includes expanders for increasing a length of the compliant fixture, wherein one of the expanders is coupled to each of the spring-like elements.

In another embodiment, for each of the spring-like elements, the first portion of the connectors cross the second portion of the connectors in a cris-cross manner without being coupled to each other.

In yet another embodiment, the spring-like elements each have one end coupled to one of the side portions by the first portion of connectors and the other end coupled to the adjacent input element by the second portion of connectors, so that when the input element is pulled laterally away from the slot, the spring-like elements coupled to the input element are pulled inward in a direction parallel to the slot and outward in a direction away from the slot.

### BRIEF DESCRIPTION OF THE DRAWINGS

The accompanying drawings, which are included to provide a further understanding of the disclosure, are incorporated in and constitute a part of this specification, illustrate embodiments of the disclosure, and together with the detailed description, explain the principles of the disclosure. No attempt is made to show features of the disclosure in more detail than may be necessary for a fundamental understanding of the disclosure and various ways in which it may be practiced.
FIG. 1 is a simplified diagram of a compliant fixture mounted on an end portion of a pile in accordance with some embodiments.
FIG. 2 is a simplified top view of a compliant fixture in accordance with some embodiments.
FIG. 3 is a simplified topside perspective view of a compliant fixture in accordance with some embodiments.
FIG. 4 is a simplified bottom plan view of a compliant fixture in accordance with some embodiments.
FIG. 5 is a simplified bottom side perspective view of a compliant fixture in accordance with some embodiments.
FIG. 6 is a simplified bottom side perspective view of a compliant fixture with expanders in accordance with some embodiments.
FIG. 7 is a simplified bottom plan view of a compliant fixture with expanders in accordance with some embodiments.

### DETAILED DESCRIPTION

Embodiments described herein provide a compliant fixture that can be easily and quickly attached to or removed from a planar member such as a pile. When used with a measurement device such as a GNSS device, a UTS, or a target, the compliant fixture enables accurate measurements of a position along an edge of the planar member. When used with a pile such as an I beam, the compliant fixture can be self-centering for consistent position measurements between piles.

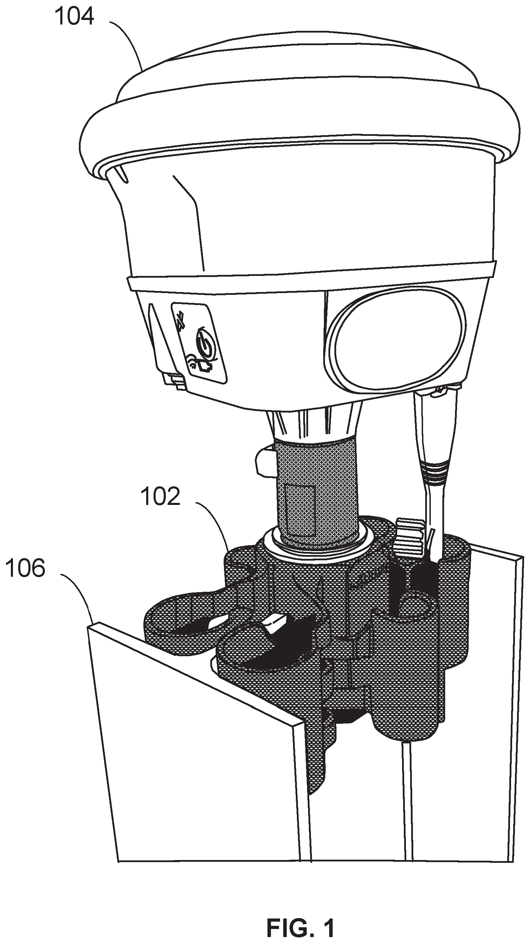

FIG. 1 is a simplified diagram of a compliant fixture 102 mounted on an end portion of a pile 106 (or I beam) in accordance with some embodiments. A GNSS device 104 is attached to the compliant fixture 102 to enable position measurements of the end (or edge) of the pile 106. The GNSS device 104 is removably attached to a rigid element of the compliant fixture 102. The rigid element provides fixed and repeatable positioning of the GNSS device 104 on the compliant fixture 102. The GNSS device 104 includes an antenna that is configured to receive signals for position measurements, and a position and orientation of the antenna relative to a point on the edge of pile can be determined in accordance with known techniques. This allows for quick and accurate position measurements of the ends of different piles.

As can be seen in FIG. 1, the compliant fixture 102 is sized to contact all inside surfaces of the pile 106, but as described below, the compliant fixture 102 also includes elements that are flexible enough to accommodate variances in size and shape.

The GNSS device 104 is used in FIG. 1 as an example of a measurement device that may be coupled to the compliant fixture 102. Other devices such as a UTS, a target, or other measurement devices may be used with other embodiments in a similar manner. Also, while an I beam is used as the pile 106 is this example, the compliant fixture 102 may be used for position measurements of the end (or edge) of any other structures having planar members.

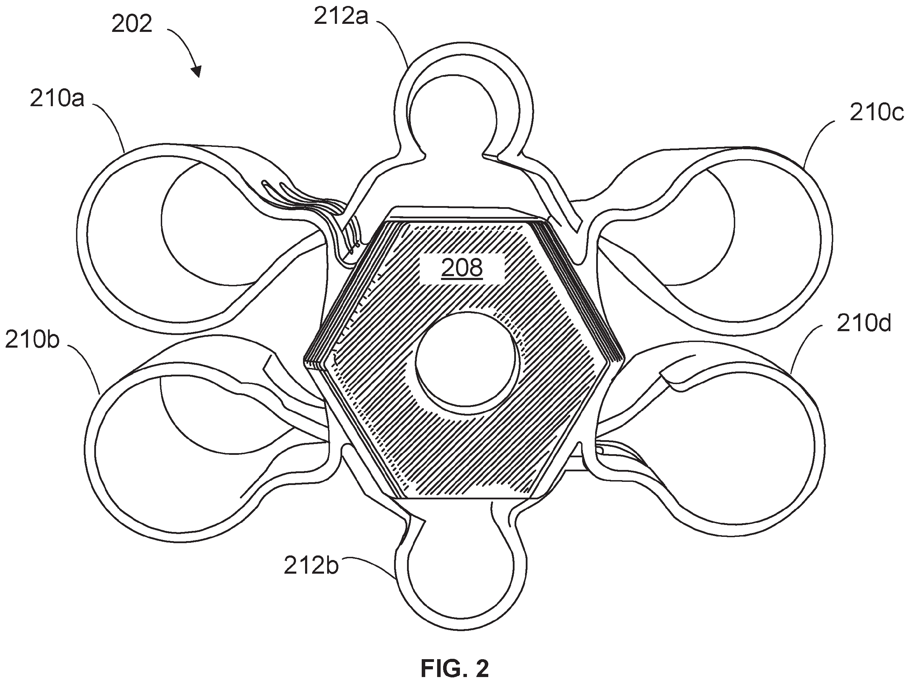

FIG. 2 is a simplified top view of a compliant fixture 202 in accordance with some embodiments. The compliant fixture 202 in this example includes a rigid element 208, spring-like elements 210a-210d, and input elements 212a-212b.

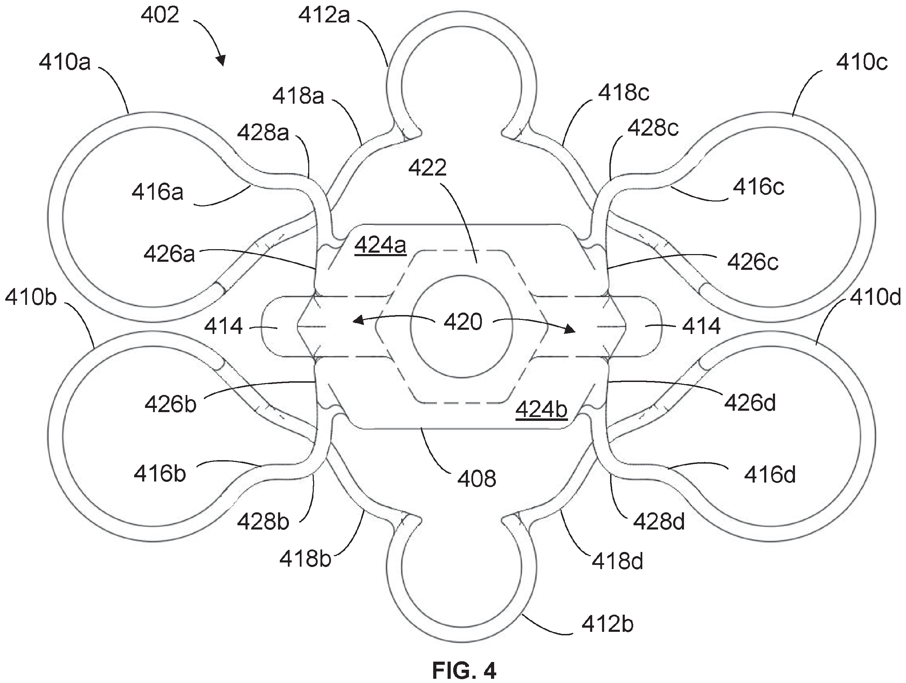

The rigid element 208 includes a hole that may be sized to enable a measurement device such as a GNSS device or survey target to be coupled to a top side of the rigid element 208. A bottom (or backside) of the rigid element 208 may include an indentation (see indentation 422 in FIG. 4) sized to receive a head of a bolt used to attach the measurement device.

The example of FIG. 2 includes four spring-like elements 210a-210d. The spring-like elements 210a-210d each have a portion with an oval shape and a portion with connectors. The connectors are described more fully below. The spring-like elements 210a-210d are flexible so that the space between them can be increased when placing the spring-like elements 210a-210d over a planar member or removing them from a planar member. In a relaxed state the space between the spring-like elements 210a-210d decreases to grip a planar member. The spring-like elements 210a-210d are flexible enough to accommodate variances in size and shape of a planar member.

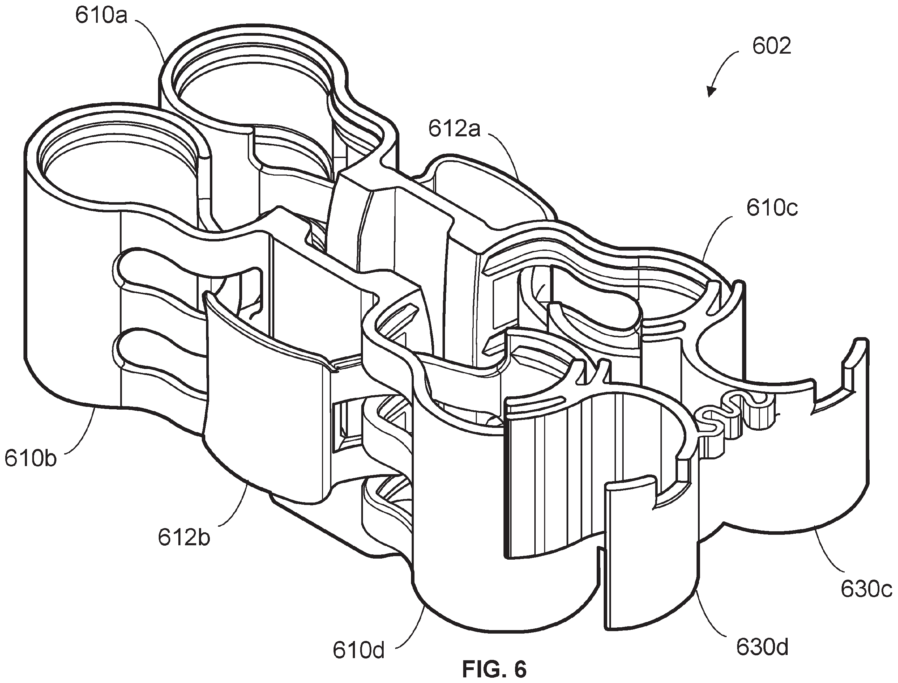

The example of FIG. 2 includes two input elements 212a-212b. Each of the spring-like elements 210a-210d have connectors that are coupled to the input elements 212a-212b and connectors that are coupled to the rigid element 208. Specifically, the input element 212a is coupled to the spring-like elements 210a and 210c by the connectors, and the input element 212b is coupled to the spring-like elements 210b and 210d by the connectors. The input elements 212a-212b in this example both have a partial cylindrical shape that provides a finger hold for manipulating the spring-like elements 210a-210d. However, the shape of the input elements 212a-212b is not limited and may, for example, be more curved shape as shown in FIGS. 6-7 in accordance with some embodiments. Pulling the input elements 212a-212b outward away from the rigid element 208 opens a first space between the spring-like elements 210a and 210b and a second space between the spring-like elements 210c and 210d so that the compliant fixture can be placed on a planar member such as a pile. Releasing the force on the input elements 212a-212b relaxes the spring-like elements 210a-210d so that the first and second spaces close.

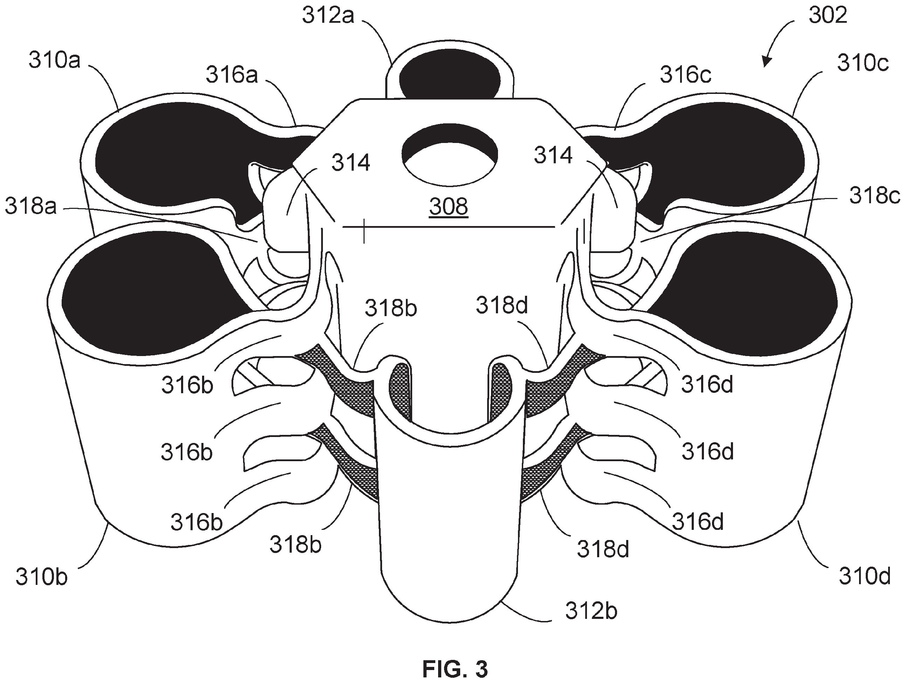

FIG. 3 is a simplified topside perspective view of a compliant fixture 302 in accordance with some embodiments. Like FIG. 2, the compliant fixture 302 in this example includes a rigid element 308, spring-like elements 310a-310d, and input elements 312a-312b. This example also shows first connectors 316a-316d that couple the spring-like elements 310a-310d to a side of the rigid element 308, and second connectors 318a-318d that couple the spring-like elements 310a-310d to the input elements 310a-310b. In an embodiment, each of the spring-like elements 310a-310d include three of the first connectors and two of the second connectors, although other embodiments may include different numbers of the first connectors and/or the second connectors. Only some of the first connectors 316a, 316c and the second connectors 318a, 318c are visible in this perspective view. The views of FIGS. 4-5 show additional features.

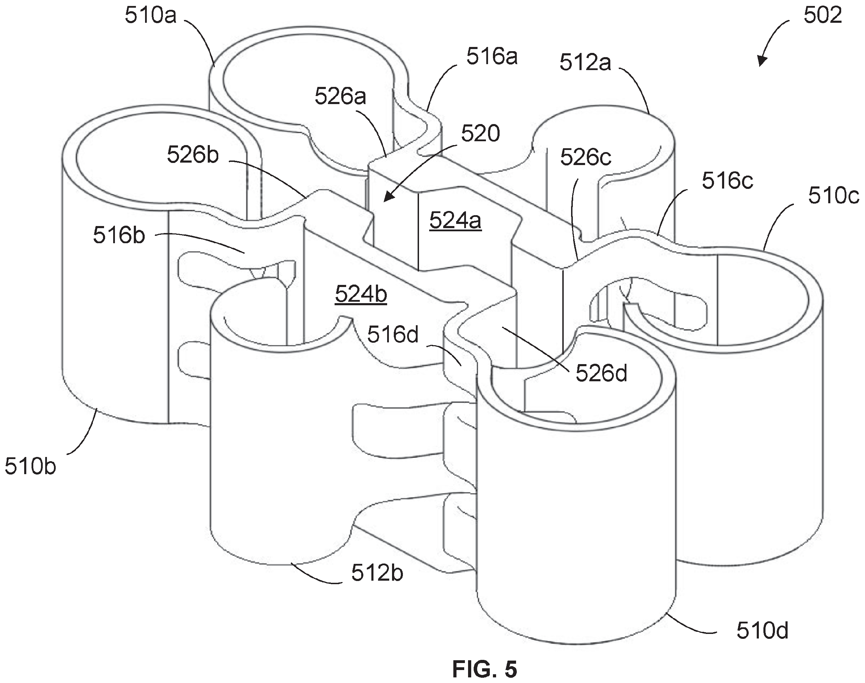

FIG. 3 also shows tabs 314 on opposite sides of the rigid element. The tabs 314 are configured to contact an end (or edge) of a planar member and provide additional support for mounting the compliant fixture on the planar member. The tabs 314 overly a slot (see tabs 414 and slot 420 in FIG. 4) that forms a gap between side portions of the rigid member 308 (see side portions 424a-424b in FIG. 4 and side portions side portions 524a-524b in FIG. 5).

FIG. 4 is a simplified bottom plan view of a compliant fixture 402 in accordance with some embodiments. This figure also shows the compliant fixture 402 with rigid element 408, spring-like elements 410a-410d, and input elements 412a-412b. The input elements 412a-412b are positioned adjacent to respective side portions 424a, 424b of the rigid element 408.

This view also shows first connectors 416a-416d and second connectors 418a-418d. The first connectors 416a, 416c couple respective spring-like elements 410a, 410c to the side portion 424a, and the second connectors 418a, 418c couple respective spring-like elements 410a, 410c to the input element 412a. Similarly, the first connectors 416b, 416d couple respective spring-like elements 410b, 410d to the side portion 424b, and the second connectors 418b, 418d couple respective spring-like elements 410b, 410d to the input element 412b. As can be seen in this figure, each of the first connectors 416a-416d cross respective ones of the second connectors 418a-418d in a cris-cross manner. Although not shown in this plan view, the first connectors 416a-416d and the second connectors 418a-418d are not coupled to each other.

With reference to FIG. 4, when the input elements 412a-412b are pulled laterally away from the slot 420, the spring-like elements 410a-410d are pulled inward in a direction parallel to the slot 420 and outward in a direction away from the slot 420. When force on the input elements 412a-412b is released, elbow shapes 428a-428d of the first connectors 416a-416d press the spring-like elements 410a-410d outward in a direction parallel to the slot 420 and inward in a direction toward the slot 420.

In an embodiment, the rigid element 408 including the side portions 424a-424b, the spring-like elements 410a-410d, and the input elements 412a-412b are made of the same material. For example, each of the elements may be made of a plastic or metal material. The rigid element 408 and the side portions 424a-424b may be thicker to provide increased rigidity compared to the spring-like elements 410a-410d and the input elements 412a-412b. In some embodiments, the compliant fixture 402 may be made using known 3D printing techniques.

FIG. 4 also shows the tabs 414 and the slot 420 (mentioned previously). The slot 420 forms a gap between side portions 424a and 424b of the rigid member 408. The slot 420 is sized to allow a planar member to fit into the gap so that the side portions 424a-424b are separated from each other when the compliant fixture 402 is mounted on a planar member. As an example, in some embodiments the slot 420 may have a width of about 10 mm, so that a preferred use of the compliant fixture 420 would be with a planar member having a width of about 10 mm or less. Of course, the width of the slot 420 may be greater or less than about 10 mm depending on the desired application.

FIG. 5 is a simplified bottom side perspective view of a compliant fixture 502 in accordance with some embodiments. This figure also shows the compliant fixture 502, spring-like elements 510a-510d, and input elements 512a-512b. While a top portion of the rigid element is not visible in this view, the side portions 524a-524b of a bottom side of the rigid element are more clearly shown. The side portions 524a-524b are separated by the slot 520. The side portions 524a-524b each include a backside facing the slot 520 and a front side facing outward away from the slot 520. The front side and the backside of the side portion 524a are connected by end surfaces 526a and 526c, and the front side and the backside of the side portion 524b are connected by end surfaces 526b and 526d.

This figure also more clearly shows the first connectors 516a, 516c coupling the respective spring-like elements 510a, 510c to respective end surfaces 526a and 526c of the side portion 524a, and the first connectors 516b, 516d coupling respective spring-like elements 510b, 510d to the respective end surfaces 526b, 526d of the side portion 524b.

As can be seen in FIG. 5, the spring-like element 510a that is coupled to the end surface 526a of the side potion 524a is adjacent to the spring-like element 510b that is coupled to the end surface 526b of the side portion 524b. Also, the spring-like element 510c that is coupled to the end surface 526c of the side potion 524a is adjacent to the spring-like element 510d that is coupled to the end surface 526d of the side portion 524b. In this configuration, a plane aligned with the slot 520 separates the side portion 524a with spring-like elements 510a, 510c coupled to respective end surfaces 526a, 526b from the side portion 524b with spring-like elements 510b, 510d coupled to respective end surfaces 526b, 526d.

FIG. 6 is a simplified bottom side perspective view of a compliant fixture 602 with expanders 630c, 630d in accordance with some embodiments. Like previous examples, this figure shows spring-like elements 610a-610d and input elements 612a-612b. In this example, the expanders 630c, 630d are coupled to spring-like elements 610c, 610d respectively to increase a length of the compliant fixture 602. In some embodiments, another set of expanders may be coupled to the spring-like elements 610a, 610b. The expanders may be useful when measuring I beams where the planar middle portion of the beam has a greater length than the compliant fixture 602. Expanders of an appropriate size may be used so that when the compliant fixture 602 is mounted on the I beam, the compliant fixture 602 contacts all inside surfaces of the I beam. Using expanders on each of the spring-like elements allows the compliant fixture 602 to be self-centering on the I beam.

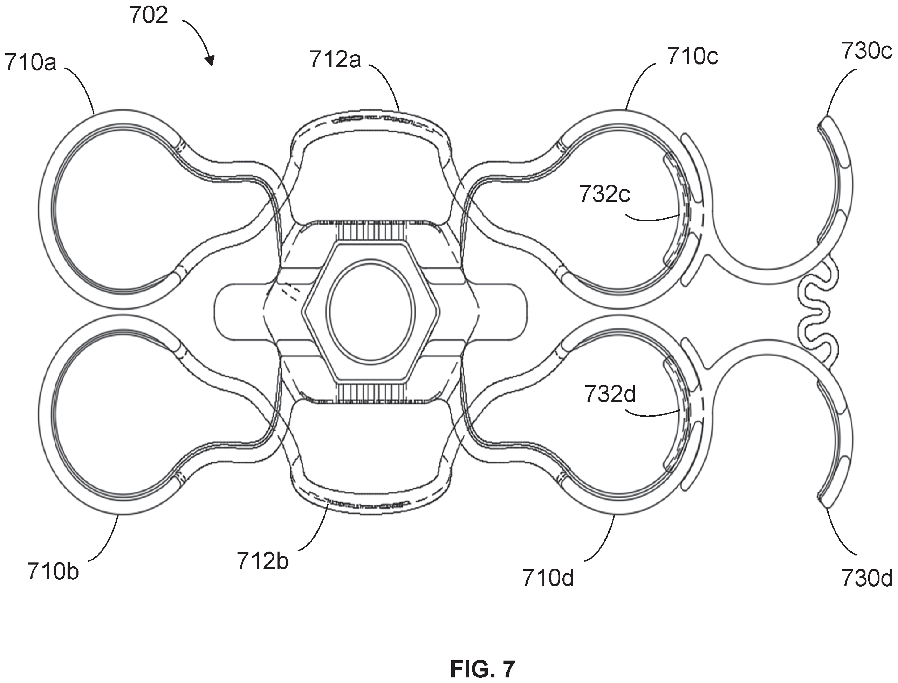

FIG. 7 is a simplified bottom plan view of a compliant fixture 702 with expanders 730c, 730d in accordance with some embodiments. This figure also shows spring-like elements 710a-710d and input elements 712a-712b. In this example, the expander 730c includes a portion 732c that couples to the spring-like element 710c, and the expander 730d includes a portion 732d that couples to the spring-like element 710d. The spring-like elements may have a rib on an inner surface, and the expanders may clip on the rib to stay in place. In some embodiments, additional expanders may be coupled to the expanders 730c, 730d to increase the length of the compliant fixture 702 as necessary.

The devices and features discussed above are examples. Various configurations may omit, substitute, or add various features or components as appropriate. For instance, features described with respect to certain configurations may be combined in various other configurations. Different aspects and elements of the configurations may be combined in a similar manner. Also, technology evolves, and thus many of the elements are examples and do not limit the scope of the disclosure or claims.

Specific details are given in the description to provide a thorough understanding of exemplary configurations including implementations. However, configurations may be practiced without these specific details. For example, well-known structures and techniques have been shown without unnecessary detail to avoid obscuring the configurations. This description provides example configurations only, and does not limit the scope, applicability, or configurations of the claims. Rather, the preceding description of the configurations will provide those skilled in the art with an enabling description for making and using described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other configurations may take precedence over or otherwise modify the application of the technology. Accordingly, the above description does not bind the scope of the claims.

As used herein and in the appended claims, the singular forms "a", "an", and "the" include plural references unless the context clearly dictates otherwise. Thus, for example, reference to "a member" includes reference to one or more of such members, and reference to "a side portion" includes reference to one or more side portions and equivalents thereof known to those skilled in the art, and so forth.

Also, the words "comprise," "comprising," "contains," "containing," "include," "including," and "includes," when used in this specification and in the following claims, are intended to specify the presence of stated features or elements, but they do not preclude the presence or addition of one or more other features, elements, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A compliant fixture for mounting devices to a planar member, comprising:
a rigid element having a top side and a bottom side, wherein the bottom side includes two side portions separated by a slot that forms a gap between the side portions;
spring-like elements each having a portion with an oval shape and a portion with connectors, the connectors including a first portion of connectors and a second portion of connectors, wherein each of the spring-like elements is positioned adjacent to and coupled to one of the side portions by the first portion of connectors; and
input elements each positioned adjacent to one of the side portions, wherein each of the input elements is coupled to the spring-like elements that are coupled to the adjacent side portion, and each input element is coupled to the spring-like elements by the second portion of connectors.

2. The compliant fixture of claim 1, wherein the rigid element includes a hole passing therethrough, the hole sized to enable a Global Navigation Satellite System, GNSS, device or a survey target to be coupled to the top side of the rigid element.

3. The compliant fixture of claim 1 or 2, wherein the slot is sized to allow the planar member to fit into the gap so that the side portions are separated from each other by the planar member.

4. The compliant fixture of any one of the preceding claims, each side portion including a backside facing the slot and a front side facing outward away from the slot, the front side and the backside connected by end surfaces.

5. The compliant fixture of any one of the preceding claims, wherein the spring-like elements consist of four spring-like elements.

6. The compliant fixture of any one of the preceding claims, wherein the input elements consist of two input elements.

7. The compliant fixture of any one of the preceding claims, wherein each of the spring-like elements is positioned adjacent to and coupled to a different one of the end surfaces of the side portions, so that each side portion has one of the spring-like elements coupled to each end surface thereof, and wherein each of the spring-like elements coupled to an end surface of one side portion is adjacent to another one of the spring-like elements that is coupled to an end surface of the other side portion, so that a plane aligned with the slot separates one of the side portions with spring-like elements coupled to each end surface thereof from the other side portion with spring-like elements coupled to each end surface thereof.

8. The compliant fixture of any one of the preceding claims, wherein for each of the spring-like elements, the first portion of the connectors cross the second portion of the connectors in a cris-cross manner without being coupled to each other.

9. The compliant fixture of any one of the preceding claims, wherein the spring-like elements each have one end coupled to the end surface of the side portion by the first portion of connectors and the other end coupled to the adjacent input element by the second portion of connectors, so that when the input element is pulled laterally away from the slot, the spring-like elements coupled to the input element are pulled inward in a direction parallel to the slot and outward in a direction away from the slot.

10. The compliant fixture of any one of the preceding claims, wherein each of the spring-like elements includes three of the first portion of connectors and two of the second portion of connectors.

11. The compliant fixture of any one of the preceding claims, wherein each of the input elements has a partial cylindrical shape.

12. The compliant fixture of any one of the preceding claims, wherein each of the side portions and the spring-like elements coupled thereto and the input element coupled to the spring-like elements consist essentially of the same material with the side portions being thicker and more rigid than the spring-like elements and the input element.

13. The compliant fixture of any one of the preceding claims, wherein the rigid element includes tabs on opposite sides overlying the slot, the tabs configured to contact an end of the planar member.

14. The compliant fixture of any one of the preceding claims, wherein the planar member is part of a pile, and the spring-like elements are configured to self-center the compliant fixture on the pile.

15. The compliant fixture of any one of the preceding claims, further comprising expanders for increasing a length of the compliant fixture, wherein one of the expanders is coupled to each of the spring-like elements.
